# EUROPEAN PATENT SPECIFICATION

(11) **EP 2 147 997 B1**
(45) Date of publication and mention of the grant of the patent: **12.03.2014**
(21) Application number: 08104820.9
(22) Date of filing: 22.07.2008
(51) Int. Cl.: D06F 39/08, A47L 15/42, F16L 37/088

(54) **Water-bearing appliance with an improved pipe connection**
Wasserführendes Gerät mit verbessertem Rohranschluss
Appareil à écoulement d'eau doté d'un raccord de tuyau amélioré

(43) Date of publication of application: 27.01.2010
(73) Proprietor: Electrolux Home Products Corporation N.V., 1130 Brussel (BE)
(72) Inventor: Mazzocco, Roberto, 33170 Pordenone (IT); Olivaro, Paolo, 31010 Orsago (Treviso) (IT)
(74) Representative: Nardoni, Andrea

(56) References cited:
- WO-A-90/06468
- DE-U1- 20 321 171

## Description

The present invention refers to a water-bearing appliance, such as a laundry washing machine, a laundry dryer, a washer-dryer machine, a dishwasher or a steam iron, having an improved pipe connection.

It is known in the art that water-bearing appliances are provided with pipe lines and pipe connections that must ensure not only absence of fluid leakage but also an efficient seal even when such pipes are subject to pressure or water hammer. Many pipe lines inside a water-bearing appliance have portions that are stably fixed to a stationary member of the appliance, like for example the cabinet, and further portions that are linked to members that are subject to oscillatory movements such as the tub in a laundry treating machine. Pipe lines of this type require pipe connections that can work under dynamical conditions ensuring that accidental release of such connections is avoided. For this aim many types of pipe connections have been proposed. A common pipe connection suitable for avoiding undesirable disassembling of coupled pipes comprises hooking means provided either on the male or the female portion of pipes to be connected such that when the male portion is inserted within the female portion said hooking means snap into corresponding seats thereby firmly joining the pipes. A pipe connection of this type is disclosed in the German Utility Model DE 203 21 171U.

A drawback of the above mentioned kind of pipe connection consists in that hooking means may break when coupled pipes have to be voluntarily disassembled. This is due to the fact that the action made by hooking means on their seats may be so intense to require a tool, like a screwdriver, for releasing pipe connection. The use of a tool for disassembling a pipe connection may irreparably damage said hooking means and/or their seats making impossible to restore the pipe connection in a way suitable for granting a sufficient grade of wet seal.

Even if a tool is not used for mechanically releasing said hooking means but only an axial movement is given to pipes in order to snap hooking means out of their seats, it may happen that said hooking means break remaining within the pipes and compromising the regular work of the water-bearing appliance.

A further drawback of a pipe connection made with hooking means consists in that joined pipes are prevented from being rotated relatively one another. This may results to be inconvenient during assembling operations of water-bearing appliance because said pipes cannot adapt their relative position at their joint, thereby resulting too rigid.

WO 9006468 discloses a union device for pipe joints, where the joint is within the wall thickness of the pipes being joined, and includes a female part and a male part, which are in substantially complementally implementation, so as to permit to the male part to be inserted into the female part. In the outer and inner peripheral surfaces of the male and female parts there are grooves extending round the periphery such as to form a cavity for a locking ring when the joint has been assembled. In this cavity there is a locking ring having the form of a conical ring of material which retains its shape with a given resiliency. This locking ring is provided with a through slit or with one or more shorter slits from its large end towards its small end. The locking ring is normally placed in the groove in the female part with the large end facing axially outwards, such that on inserting the male part into the female part the male part causes the locking ring resiliently to move away, such as to regain its original shape once again when the groove in the male part comes opposite the locking ring.

The aim of the present invention is therefore to solve the noted problems and thus providing a water-bearing appliance comprising one or more pipe lines wherein pipe connections ensure an efficient seal and a good resistance against accidental pipe disassembly due, for example, to high pressure inside pipe line and/or to a sudden water hammer.

An object of the present invention is to provide a water-bearing appliance wherein pipe connection can be manually disassembled without using any special tool. The same pipe connection being disassemblable and re-assemblable a number of times without reducing its sealing efficiency.

A further object of the invention is to provide a water-bearing appliance wherein pipe connections allow connected pipes to be reciprocally movable.

Advantages, objects, and features of the invention will be set forth in part in the description and drawings which follow and in part will become apparent to those having ordinary skill in the art upon examination of the following or may be learned from practice of the invention. The objects and advantages of the invention may be realised and attained as particularly pointed out in the appended claims.

The accompanying drawings, which are included to provide a further understanding of the invention and are incorporated in and constitute a part of this specification, illustrate a possible embodiment of the invention and together with the description serve to explain the principles of the invention.

In the drawings:
Figure 1 shows a water-bearing appliance with a pipe line having a pipe connection according to the invention;
Figure 2 shows a sectional view of the pipe connection shown in figure 1;

In the following description with the expression "water-bearing appliance" it is intended all kind of appliances in with water is used or treated in the working cycle of the appliance. Examples of water-bearing appliances comprised in the present disclosure are laundry washing machines, laundry dryers, washing-drying machines, dishwashers and steam irons.

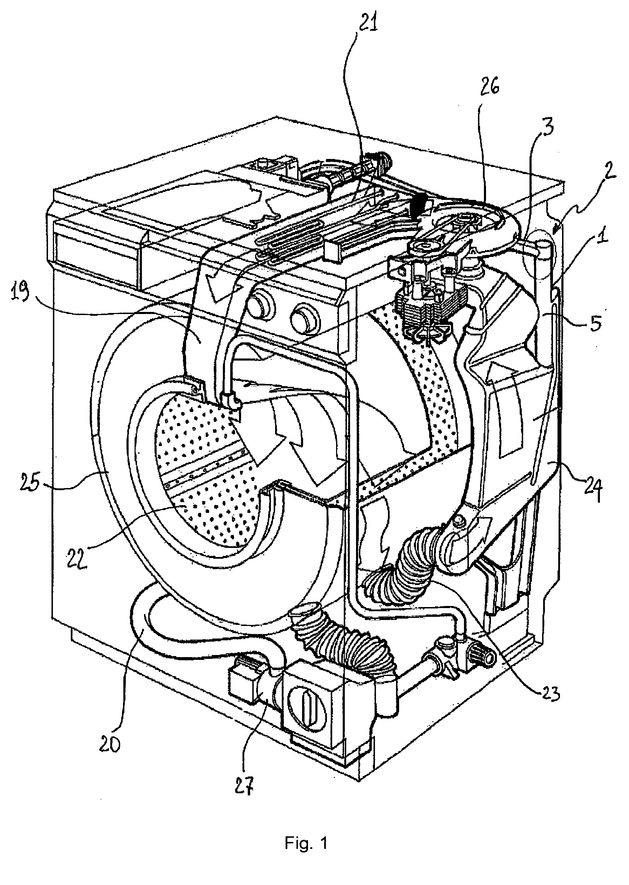

As a mere example of a possible way of carrying out the invention, figure 1 shows a washing-drying machine, i.e. an appliance adapted to wash and dry laundry, provided with a pipe line 1 having a pipe connection 2. In figure 1 it is also evidenced as the washing-drying machine comprises an air pipe line 19 through which drying air flows following direction indicated by arrows drawn along the pipe line 19. During a laundry drying cycle, drying air is heated by heating means 21 and subsequently introduced into a drum 22 rotating within a tub 25. After being passed through laundry to be dried, said air becomes humid and it is exhausted by a waved conduit 23 to a condenser 24 where evaporated moisture is condensed by a water jet (not shown in figure 1) propelling cool water through the air path. Condenser 24 has a hollow box-like structure having a pipe fitting 5 connected to a pipe 3 that is in fluid communication with a water reservoir or with a main water supply. Pipe fitting 5 and pipe 3 form a pipe connection 2. Since condenser 24 is linked to tub 25 via conduit 23, pipe fitting 5 is subject to vibrations induced by oscillatory movements of the tub 25 when the machine is working. Pipe 3 is stationary because it is fixed to a stationary part of the machine, such as the cabinet, therefore pipe connection 2 is subject to forces that may cause an accidental release of the connection itself.

Laundry treating machine shown in figure 1 comprises also a further pipe line 20 wherein water circulates for carrying out laundry washing operations. Appropriate pumping means 26, 27 of known type are provided for moving fluid within pipe lines 19 and 20.

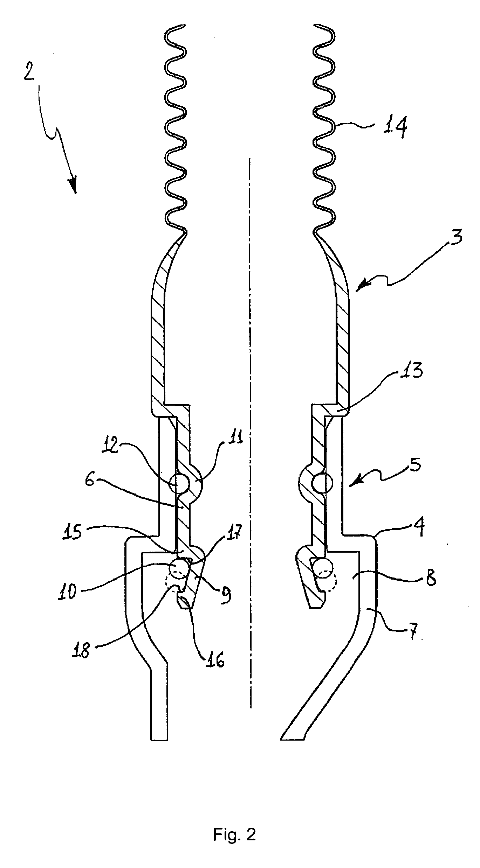

Even if it will be described hereinafter a pipe connection 2 between pipe fitting 5 of condenser 24 and a water supplying pipe 3, the content of the following description should be understood as being applicable to all pipe connections existing in each pipe line 19, 20. In figure 2 it is shown an enlarged sectional view of a pipe connection 2. The latter comprises a length of pipe 3 whose end 6 is received in a socket 4 of a pipe fitting 5. Socket 4 has an enlarged portion 7 where the pipe end 6 is housed when length of pipe 3 is assembled to the pipe fitting 5. Enlarged portion 7 has an inner diameter with is much grater than the outer diameter of the pipe end 6 such that when the latter is received in the enlarged portion 7 an air gap 8 is formed between the end 6 and the portion 7 itself.

An annular groove 11 is formed on the outer surface of pipe 3 in a portion thereof to be coupled with socket 4. Groove 11 is provided for receiving a sealing member 12 with is engageable sealingly between the outer surface of pipe 3 and the inner surface of socket 4 in order to seal the pipe connection 2 against fluid leakage outwardly of the coupling.

An annular abutment 13 is further provided on the pipe 3 such that when the pipe fitting 5 is assembled to pipe 3, socket 4 abuts on said annular abutment 13 thereby indicating to a user that pipe 3 is correctly inserted within the socket 4 and that the pipe connection 2 has been completed.

Pipe end 6 comprises a tapered surface 9 having an outwardly deformable member 10 mounted thereon. Such member 10 is preferably in the form of an elastic ring suitable for being deformed so as to increase its outer diameter. Another possible form of said outwardly deformable member 10 is an open ring, whose diameter can be enlarged by opening the ring ends wide. Outwardly deformable member 10 can slide on the tapered surface 9 as it will be more diffusely described later. Evidently, a sliding motion of member 10 on tapered surface 9 causes its diameter to change.

Tapered surface 9 has a frusto-conical shape whose radial extent increases in the direction towards the pipe end 6, i.e. in the direction of insertion of pipe 6 within socket 4. Tapered surface 9 is provided with stopping means 15, 16 that, respectively, define for the outwardly deformable member 10 a first position assumed by member 10 when pipe 3 and pipe fitting 5 are in an assembled state, and a second position assumed by member 10 during extraction of pipe 3 from socket 4. The first position of member 10 corresponds to a rest position for member 10 itself, i.e. a position in which member 10 maintain its constructional radial extension. In figure 2 deformable member 10 placed in said first position is shown in solid lines, while the same member 10 placed in the second position is shown in phantom. In order to allow said deformable member 10 to rest on stopping means 15, 16, they comprises annular shoulders 17, 18 protruding from tapered surface 9.

As it results clear from figure 2, in said first position member 10 has a radial extension which is smaller than the extension said member 10 has when it is in the second position, i.e. when it is in contact with second stopping means 16. The latter has not only the function of avoiding that deformable member 10 slips off from tapered surface 9 when pipe 3 is withdrawn from socket 4 during pipe connection 2 disassembling operations, but it also acts as reinforcing member for the pipe end 6 for avoiding that said end 6 collapses when pipe 3 is inserted or extracted from socked 4.

It will be now described as the outwardly deformable member 10 works when pipe 3 is inserted into socket 4 of pipe fitting 5 and when the same pipe 3 is withdrawn from the latter.

When a length of pipe 3 is inserted within socket 4 of pipe fitting 5, the outwardly deformable member 10 rests on shoulder 17 of the first stopping means 15 provided on the tapered surface 9 of pipe end 6. Deformable member 10 and sealing element 12 placed in the annular groove 11 scrape against the inner wall of socket 4 determining a slight resistance to pipe feed into socket 4. When socket 4 abuts against annular abutment 13, a complete insertion of pipe 3 into pipe fitting 5 is reached and the tapered surface 9 carrying deformable member 10 is housed within the enlarged portion 7 of socket 4. An air gap 8 is formed between deformable member 10 and said enlarged portion 7, i.e. no contact exists between member 10 and portion 7 when a complete pipe connection 2 is made. Sealing element 12 seals the interface between the outer surface of pipe 3 and the inner surface of socket 4.

When pipe 3 is withdrawn from socket 4 for disassembling pipe connection 2, member 10 interferes with inner wall of socket 4 and deforms outwardly by sliding on tapered surface 9 from the first position to the second position shown in phantom in figure 2. During movement of deformable member 10 from shoulder 17 of the first stopping means 15 to shoulder 18 of the second stopping means 16 the radial extension of said member 10, i.e. its diameter, get progressively larger and larger adapting to the tapered surface 9. When member 10 has reached shoulder 18 of stopping means 16 it rests on the latter until pipe 3 is completely extracted from socket 4.

Outwardly deformable member 10 and tapered surface 9 are designed so as to determine a sufficient resistance against forces that may occur when water-bearing appliance works so as to avoid accidental release of pipe connection 2 due, for example, to high pressure in pipe line 1 or to a sudden water hammer. However, said resistance can be overcome by a user when a voluntary disconnecting action is performed on pipe 3 and fitting 5 by pulling them in opposing directions. A thicker member 10 and more inclined surface 9 with respect to pipe 3 longitudinal axis make said resistance grater.

In order to improve flexibility of pipe 3 it may be made of flexible polymeric material and/or it can comprises a waved portion 14 as shown in figure 2.

Conclusively it can be stated that a water-bearing appliance according to the invention has an improved reliability because its pipe connections can ensure an efficient seal and a good resistance against accidental pipe disassembly. Said pipe connections can be manually assembled and disassembled a number of times without reducing their sealing efficiency. A pipe line of a water-bearing appliance that comprises one or more connections according to the invention is proved to be very flexible and easy to be installed within the appliance because such connections allow pipes to be reciprocally rotated.

## Claims

1. Water-bearing appliance comprising at least one pipe line (1) having one or more pipe connections (2) that comprise a length of pipe (3) and a pipe fitting (5) having a socket (4) adapted to receive one end (6) of said pipe (3), said socket (4) having an enlarged portion (7) for housing said pipe end (6) when the latter is inserted within the pipe fitting (5) said pipe end (6) comprising a tapered surface (9) on which an outwardly deformable member (10) is slidably mounted, said tapered surface (9) being provided with first and second stopping means (15, 16) defining a first and a second position between which said outwardly deformable member (10) is movable **characterised in that** said tapered surface (9) has a frusto-conical shape having a radial extent which increases in the direction towards the pipe end (6).

2. Water-bearing appliance according to claim 1 wherein, in an assembled state of pipe (3) and pipe fitting (5), an air gap (8) is formed between said enlarged portion (7) and the outwardly deformable member (10).

3. Water-bearing appliance according to claim 1 or 2 wherein, in said first position, the outwardly deformable member (10) has a radial extension which is smaller than that said member (10) has in said second position.

4. Water-bearing appliance according to any preceding claim wherein said outwardly deformable member (10) is adapted to move from the first to the second position so as to resist relative separation of the pipe (3) and the socket (4).

5. Water-bearing appliance according to any preceding claim wherein said stopping means (15, 16) comprises annular shoulders (17, 18) protruding from said tapered surface (9).

6. Water-bearing appliance according to any preceding claim wherein said length of pipe (3) comprises a annular groove (11) receiving a sealing element (12).

7. Water-bearing appliance according to any preceding claim wherein said length of pipe (3) comprises and annular abutment (13) on which said socket (4) abuts.

8. Water-bearing appliance according to any preceding claim wherein said outwardly deformable member (10) is an elastic ring.

9. Water-bearing appliance according to any preceding claim wherein said length of pipe (3) is made of a flexible polymeric material.

10. Water-bearing appliance according to any preceding claim wherein said length of pipe (3) comprises a waved portion (14).

## Patentansprüche

1. Wasserführendes Gerät, umfassend zumindest eine Rohrleitung (1) mit einem oder mehreren Rohranschlüssen (2), die eine Länge eines Rohrs (3) und ein Rohrfitting (5) umfassen, das einen Sockel (4) aufweist, der so ausgelegt ist, dass er ein Ende (6) des Rohrs (3) aufnimmt, wobei der Sockel (4) einen vergrößerten Abschnitt (7) zum Aufnehmen des Rohrendes (6) aufweist, wenn letzteres in das Rohrfitting (5) eingesetzt ist, wobei das Rohrende (6) eine verjüngte Oberfläche (9) umfasst, auf der ein nach außen verformbares Element (10) gleitend angebracht ist, wobei die verjüngte Oberfläche (9) mit einem ersten und einem zweiten Anschlagmittel (15, 16) versehen ist, das eine erste und eine zweite Position definiert, zwischen der das nach außen verformbare Element (10) bewegbar ist, **dadurch gekennzeichnet, dass** die verjüngte Oberfläche (9) kegelstumpfförmig mit einer radialen Ausdehnung ist, die sich in die Richtung hin zum Rohrende (6) erhöht.

2. Wasserführendes Gerät nach Anspruch 1, wobei ein Luftspalt (8) in einem zusammengefügten Zustand des Rohrs (3) und des Rohrfittings (5) zwischen dem vergrößerten Abschnitt (7) und dem nach außen verformbaren Element (10) gebildet ist.

3. Wasserführendes Gerät nach Anspruch 1 oder 2, wobei das nach außen verformbare Element (10) in der ersten Position eine radiale Ausdehnung hat, die kleiner als jene ist, die das Element (10) in der zweiten Position hat.

4. Wasserführendes Gerät nach einem vorstehenden Anspruch, wobei das nach außen verformbare Element (10) so ausgelegt ist, dass es sich von der ersten in die zweite Position bewegt, um einer relativen Trennung des Rohrs (3) und des Sockels (4) Stand zu halten.

5. Wasserführendes Gerät nach einem vorstehenden Anspruch, wobei das Anschlagmittel (15, 16) ringförmige Schultern (17, 18) umfasst, die von der verjüngten Oberfläche (9) vorstehen.

6. Wasserführendes Gerät nach einem vorstehenden Anspruch, wobei die Länge des Rohrs (3) eine ringförmige Nut (11) umfasst, die ein Dichtungselement (12) aufnimmt.

7. Wasserführendes Gerät nach einem vorstehenden Anspruch, wobei die Länge des Rohrs (3) ein ringförmiges Widerlager (13) umfasst, auf dem der Sockel (4) anliegt.

8. Wasserführendes Gerät nach einem vorstehenden Anspruch, wobei das nach außen verformbare Element (10) ein elastischer Ring ist.

9. Wasserführendes Gerät nach einem vorstehenden Anspruch, wobei die Länge des Rohrs (3) aus einem flexiblen polymeren Material hergestellt ist.

10. Wasserführendes Gerät nach einem vorstehenden Anspruch, wobei die Länge des Rohrs (3) einen welligen Abschnitt (14) umfasst.

## Revendications

1. Appareil à eau comprenant au moins une canalisation (1) ayant un ou plusieurs raccordements de tuyau (2) qui comprennent une longueur de tuyau (3) et un raccord (5) ayant un emboîtement (4) apte à recevoir une première extrémité (6) dudit tuyau (3), ledit emboîtement (4) ayant une partie agrandie (7) pour loger ladite extrémité de tuyau (6) lorsque cette dernière est introduite dans le raccord (5), ladite extrémité de tuyau (6) comprenant une surface effilée (9) sur laquelle est monté de façon coulissante un élément déformable vers l'extérieur (10), ladite surface effilée (9) comportant des premier et second moyens d'arrêt (15, 16) définissant une première et une seconde position entre lesquelles ledit élément déformable vers l'extérieur (10) est déplaçable, **caractérisé par le fait que** ladite surface effilée (9) a une forme tronconique ayant une étendue radiale qui augmente dans la direction allant vers l'extrémité de tuyau (6) .

2. Appareil à eau selon la revendication 1, dans lequel, dans un état assemblé du tuyau (3) et du raccord (5), un intervalle d'air (8) est formé entre ladite partie agrandie (7) et l'élément déformable vers l'extérieur (10).

3. Appareil à eau selon l'une des revendications 1 ou 2, dans lequel, dans ladite première position, l'élément déformable vers l'extérieur (10) a une extension radiale qui est plus petite que celle dudit élément (10) dans ladite seconde position.

4. Appareil à eau selon l'une quelconque des revendications précédentes, dans lequel ledit élément déformable vers l'extérieur (10) est apte à se déplacer de la première à la seconde position de façon à résister à une séparation relative du tuyau (3) et de l'emboîtement (4).

5. Appareil à eau selon l'une quelconque des revendications précédentes, dans lequel lesdits moyens d'arrêt (15, 16) comprennent des épaulements annulaires (17, 18) faisant saillie à partir de ladite surface effilée (9).

6. Appareil à eau selon l'une quelconque des revendications précédentes, dans lequel ladite longueur de tuyau (3) comprend une rainure annulaire (11) recevant un élément d'étanchéité (12).

7. Appareil à eau selon l'une quelconque des revendications précédentes, dans lequel ladite longueur de tuyau (3) comprend une butée annulaire (13) contre laquelle ledit emboîtement (4) vient en butée.

8. Appareil à eau selon l'une quelconque des revendications précédentes, dans lequel ledit élément déformable vers l'extérieur (10) est un anneau élastique.

9. Appareil à eau selon l'une quelconque des revendications précédentes, dans lequel ladite longueur de tuyau (3) est faite d'un matériau polymère souple.

10. Appareil à eau selon l'une quelconque des revendications précédentes, dans lequel ladite longueur de tuyau (3) comprend une partie ondulée (14).
